# EUROPEAN PATENT SPECIFICATION

(11) **EP 1 389 437 B1**
(45) Date of publication and mention of the grant of the patent: **04.01.2006**
(21) Application number: 03254915.6
(22) Date of filing: 07.08.2003
(51) Int. Cl.: A47B 73/00

(54) **Bottle rack**
Flaschengestell
Casier à bouteilles

(30) Priority: 15.08.2002 GB 0218989
(43) Date of publication of application: 18.02.2004
(73) Proprietor: RTA Wine Rack Company Limited, Fakenham, Norfolk NR21 0DX (GB)
(72) Inventor: Saunders, Carl Arthur, Kings Lynn, Norfolk PE31 8RG (GB)
(74) Representative: Gregory, Timothy Mark

(56) References cited:
- GB-A- 670 136
- GB-A- 2 095 985
- GB-A- 2 096 683
- US-A- 3 229 334

## Description

The present invention relates to a rack for the storage of bottles, for instance wine bottles. More particularly but not exclusively, it relates to a bottle storage rack that may conveniently and easily be assembled from a kit of parts. The present invention further relates to a method for assembling such a bottle storage rack.

It is customary for bottles containing wine and the like to be stored with their elongate axes aligned generally horizontally. A large number of bottle racks are available in which a plurality of bottles may be stored, each in a respective cell such that it may be inserted into and removed from the rack without disturbing any other bottle in the rack.

An empty bottle rack is a bulky item, and so it is common for a bottle rack to be sold in partially assembled form, or as a kit of parts, to be assembled by the user. However, this entails providing a bottle rack kit which is easy to assemble with minimal tools and experience, yet which is robust and stable once assembled.

One type of "self-assembly" bottle rack which has been available for many years comprises a plurality of substantially horizontally aligned elongate wooden blocks, connected at a respective first end of each block by a first grid of metal strips, and at a respective second end of each block, remote from the first, by a second grid of metal strips. The strips of the first grid are notched at regular intervals so that they may be interlocked to form said grid with each strip aligned edge-on to the first ends of the blocks. (See Figures I and 2 and the detailed description associated therewith, below). Each block is provided at its first end with a pair of orthogonal slots, to receive the two strips forming an intersection of the first grid. A wooden block is thus mounted to each intersection of the first grid so that the wooden blocks are held in an orthogonal array. Such a rack is described in GB2095985A.

The strips of the second grid are each mounted flat on to a respective second end of each block of a row or column of said orthogonal array. Said strips are apertured so that a nail, screw or other fixing may be passed through an aperture into a second end of a block.

The wooden blocks are thus held securely, defining with the grids an array of cells in which bottles may be stored. The spacing between the blocks is such that a bottle, resting in a cell, is supported by a lower block or between two lower blocks. A neck of the bottle may protrude between four strips of the first grid which define a mouth of the cell.

The elongate wooden blocks of such racks are generally of a continuous cross-sectional profile. Cylindrical blocks and blocks of polygonal cross-section have been used, but the most common form has a substantially square cross-section, with the orthogonal slots in its first end running substantially from each corner to a diagonally-opposite corner thereof. In the assembled rack, each elongate face of the block will thus be aligned at about 45° to the axis of the grid.

There are, however, difficulties associated with assembling such a bottle rack. A first step is normally to assemble the first grid of metal strips on a horizontal surface. The wooden blocks are then mounted to the grid at each intersection.

To impart stability to the assembled rack, it is necessary for the metal strips to be held securely in said slots. The slots are hence dimensioned so that the strips are a tight fit therein. As a consequence, the strips must be very accurately aligned before the slots are offered up to them, and considerable force may be needed to push each block into full engagement with the respective strips.

Assembling such a rack can hence be a lengthy and frustrating procedure, which few users have sufficient dexterity to carry out with any degree of comfort. It would be of great benefit if a "self-assembly" bottle rack could be more conveniently and rapidly assembled.

It is hence an object of the present invention to provide a bottle storage rack which obviates the above disadvantages and which may be assembled rapidly and conveniently from its component parts. It is also an object of the present invention to provide a method for assembling such a bottle storage rack, and it is further an object of the present invention to provide a device to facilitate the assembly of such a bottle storage rack.

According to the present invention, there is provided a bottle storage rack comprising a substantially orthogonal grid of strip means, a plurality of elongate support members, each support member being provided at a first end with orthogonal slots each of which is wider adjacent a mouth thereof than it is at an inner end, and which are adapted so to accommodate a respective intersection of the grid that the support member extends substantially perpendicularly to the plane of said grid.

Preferably, each said slot comprises a relatively wide guide portion adjacent an outer end of the slot and a narrower gripping portion extending inwardly therefrom.

The strip means may be a friction fit within each gripping portion.

The slots may each be profiled to taper progressively down from the guide portion to the gripping portion.

Alternatively, the guide portion and the gripping portion may have a distinct boundary therebetween.

The support members may be connected one to another at a second end of each by means of a plurality of apertured strip means.

The second end of each support member may be provided with a pilot hole extending generally longitudinally of the support member, such that an apertured strip means may be mounted thereto using a nail, screw or other fixing extending through an aperture of said strip means and into the pilot hole.

The grid of strip means may comprise first and second sets of strip members having respective interlocking notches at intersections of the grid.

The support members may be made of wood, optionally a softwood, and the strip members may be made of metal, advantageously galvanised steel.

The bottle storage rack may be assembled by a method comprising the steps of providing a plurality of notched strip members, arranging the strip members in a substantially orthogonal grid with a notch of a first strip member engaging with a notch of a second strip member, providing a plurality of elongate support members each provided with two orthogonal slot means, characterised in that each said slot means is wider adjacent its mouth than at an inner end, and in that said support members are mounted to at least some intersections of the grid.

The method may comprise further steps of providing a plurality of alignment means, each comprising a body provided with two orthogonal slot means, mounting each said alignment means to an intersection of the grid to hold the grid substantially in alignment.

Preferably, the alignment means are removed and further support means are then mounted to the intersections vacated thereby.

There is also provided a kit of parts from which the bottle storage rack may be assembled, comprising a plurality of notched elongate strip members, a plurality of elongate support members each provided at a first end with orthogonal slot means capable of receiving said elongate strip members, and at least one alignment means comprising a body substantially smaller than said support members provided with orthogonal slot means capable of receiving said elongate strip members.

Preferably, the kit comprises a plurality of said alignment means, optionally at least two.

The elongate strip members may be assemblable into an orthogonal grid by interlocking the notches thereof, and the alignment means may be adapted to be removably mountable to the grid thus produced, to ensure that it remains orthogonal while the support members are being mounted thereto.

The alignment means may comprise a plastics material, such as nylon.

Embodiments of the present invention will now be more particularly described by way of example and with reference to the accompanying drawings, in which:
**Figure 1** is a side elevation of a notched metal strip of a frontal grid of a bottle rack of known form in isolation;
**Figure 2** is a scrap perspective view of part of a frontal grid assembled from a plurality of metal strips of Figure 1;
**Figure 3A** is an end elevation of a first end of a wooden strut of known form;
**Figure 3B** is a scrap side elevation of the first end of the strut of Figure 3A;
**Figure 4** is a scrap perspective view of part of the frontal grid of Figure 2, with two wooden struts of Figures 3A and 3B mounted thereto;
**Figure 5** is a scrap perspective view of a second end of a plurality of said struts, with a part of a known rear grid of bottle rack mounted thereto;
**Figure 6A** is an end elevation of a first end of a wooden strut according to a first embodiment of the present invention;
**Figure 6B** is a scrap side elevation of the first end of the strut of Figure 6A;
**Figure 7A** is an end elevation of a first end of a wooden strut according to a second embodiment of the present invention;
**Figure 7B** is a scrap side elevation of the first end of the strut of Figure 7A;
**Figure 8A** is an end elevation of a first end of a wooden strut according to a third embodiment of the present invention;
**Figure 8B** is a scrap side elevation of the first end of the strut of Figure 8A;
**Figure 9** is an isometric view of a first form of alignment piece;
**Figure 10** is a side elevation of a second form of alignment piece embodying the present invention;
**Figure 11** is a scrap perspective view of a frontal grid as in Figure 2 with the alignment piece of Figure 10 mounted thereto; and
**Figure 12** is a scrap perspective view of a second end of a plurality of said struts.

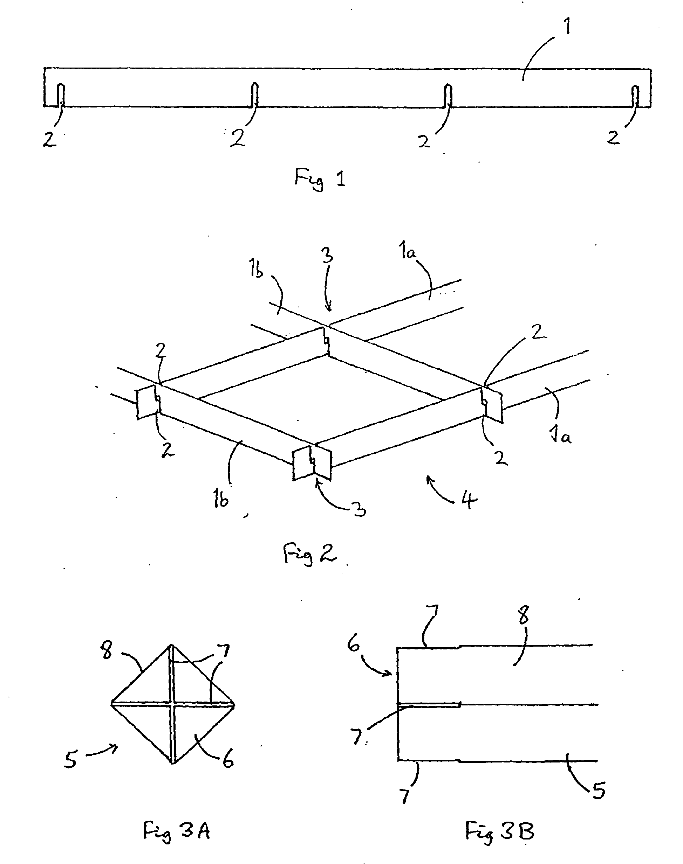

Referring now to the Figures, and to Figures 1 and 2 in particular, a form of bottle rack known in the prior art comprises eight elongate notched metal strips 1, each provided with four equidistantly spaced notches 2, with the outermost notches 2 each being adjacent a respective end of the strip 1. Each notch 2 extends slightly more than halfway across the strip 1. The strips 1 may comprise any convenient metal, or even a rigid plastics material, but they are most frequently made of galvanised steel.

As shown in Figure 2, the strips 1 are assembled into an orthogonal grid. A first set of strips 1a extend generally parallelly one to the other with an edge containing their notches 2 facing upwardly. A second set of strips I b extend generally parallelly one to the other and generally orthogonally to the first set of strips la with an edge containing their notches 2 facing downwardly. At each intersection 3 between a strip 1a of the first set and a strip 1b of the second set, respective notches 2 of each strip 1a, 1b interlock to connect the strips 1a, 1b.

The strips 1a, 1b thus form a frontal grid 4 for a bottle rack, although at this stage of assembly the frontal grid 4 is laid flat on a suitable surface. As the notches 2 are evenly spaced, the frontal grid 4 comprises an array of squares. The strips 1 shown are for a four-by-four frontal grid 4. Clearly, other sizes of frontal grid are possible, with appropriate numbers of notches on the strips 1.

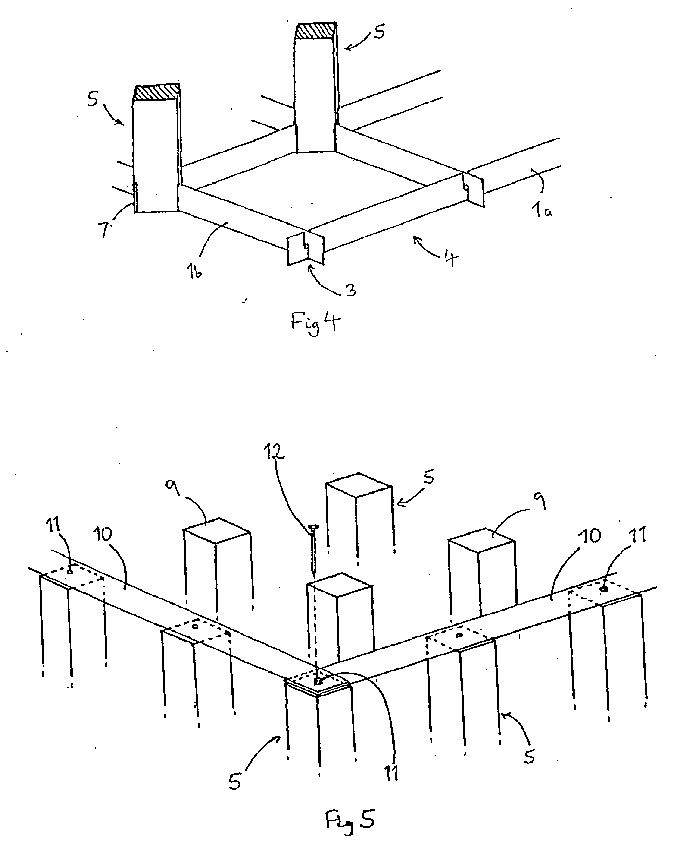

The known bottle rack further comprises an elongate wooden strut 5 corresponding to each intersection 3 of the frontal grid 4. As shown in Figures 3A and 3B, each strut 5 has a continuous substantially square cross-section, and is provided at a first end 6 with a pair of orthogonal slots 7 extending longitudinally into the struts 5 and extending diagonally from one corner to an opposite corner.

The strut 5 is here shown oriented as in the assembled rack, extending substantially horizontally, and with each elongate face 8 of the strut aligned at around 45° to the vertical. Each upper elongate face 8, together with, if necessary, a corresponding face of an adjacent strut 5, is thus available to support a horizontally extending bottle.

The struts 5 are typically made from a softwood, such as pine, although other types of wood, or even plastics materials, may also be used.

Figure 4 shows an intermediate stage of assembly, in which two wooden struts 5 have been mounted to the frontal grid 4. Each strip 1a, 1b should be flush with the first end 6 of each strut 5, and the struts 5 should each extend substantially perpendicularly away from the frontal grid 4 (the struts 5 are shown in shortened form in Figure 4 for clarity).

As shown in Figure 5, once all the wooden struts 5 are in place on the frontal grid 4, the second ends 9 of each strut 5 are connected together by means of rear grid of elongate apertured metal strips 10 (only two of which are shown here, for clarity). A single strip 10 thus may link each strut 5 in a particular column or row, and each strut 5 will be connected to two orthogonal strips 10.

Unlike the strips 1 of the frontal grid 4, the strips 10 of the rear grid lie flat across the second end 9 of each strut 5. Apertures 11 are provided in each strip 10 corresponding to each strut 5. The strips 10 are fastened to each strut 5 with a nail 12, or a screw or similar fixing, passed through an aperture 11 in each strip 10 and driven into a pilot hole 18 of the second end 9 of the corresponding strut 5. It is convenient first to attach four perimeter strips 10, and then to attach a remainder of the strips 10 therebetween.

The assembly of a conventional bottle rack as described above is rarely straightforward. Until several struts 5 have been position, the frontal grid 4 as shown in Figure 2 is not stable. The notches 2 are substantially broader than the thickness of the strips 1, and so the strips 1 tend to tilt, rather than extending substantially vertically as shown. It is difficult to maintain the two strips 1a, 1b at an intersection 3 exactly in alignment, particularly while a wooden strut 5 is being offered up to the intersection 3 to be mounted thereto.

The bottle rack of the present invention therefore differs from that described above in at least one important regard, as does the method of assembly thereof. Each wooden strut 5 of the bottle rack embodying the present invention is provided with a pair of orthogonally-aligned slots 7 at its first end 6, each of which comprises a relatively narrow inner holding portion 13 and a relatively wider outer guide portion 14.

In the strut 5 of Figures 6A and 6B, the inner holding portion 13 is dimensioned similarly to the slots 7 of the conventional strut 5 of Figures 3A and 3B, such that a metal strip 1 is a friction fit therein. The outer guide portion 14 comprises a step in one wall of each slot 7, such that the slot 7 is significantly wider adjacent its mouth.

In the strut 5 of Figures 7A and 7B, the inner holding portion 13 is identical to that shown in Figures 6B, but the outer guide portion 14 comprises a step in each wall of each slot 7.

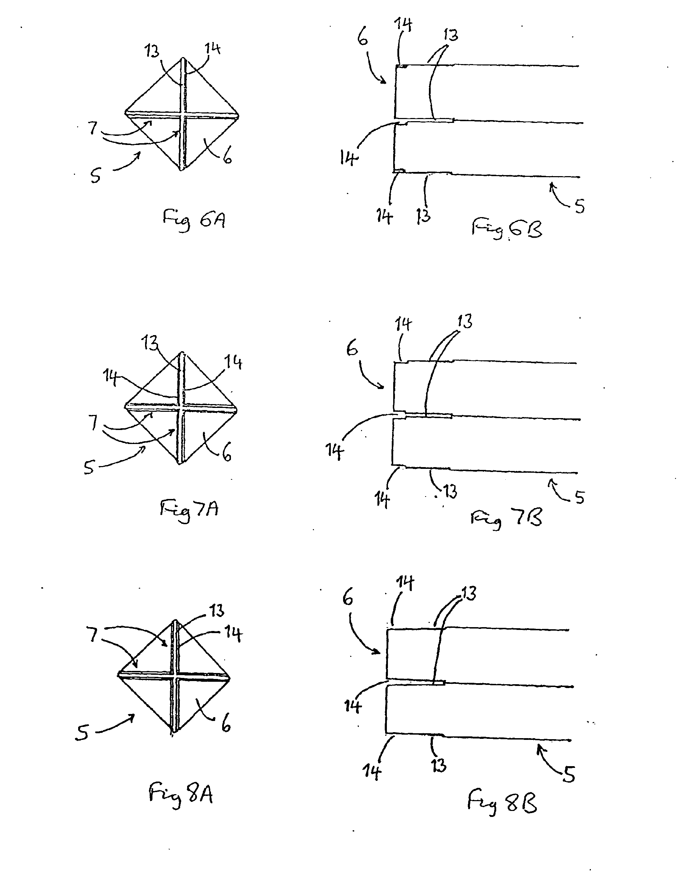

In the strut 5 of Figures 8A and 8B, the slot 7 tapers down from the outer guide portion 14 to the inner holding portion 13.

For any of the struts 5 of the present invention, the width of the outer guide portion 14 makes it significantly easier to guide the metal strips 1a, 1b at an intersection 3 of the frontal grid 4 into the slots 7, without requiring such precise alignment of the strips 1a, 1b as has hitherto been necessary. The strips 1a, 1b are then pushed into the inner holding portions 13 of each slot 7 where they are firmly held in place, and will automatically be forced into more exact alignment. It has been found, for example, that a guide portion 14 double the width of a holding portion 13 can allow at least a five-fold increase in speed of mounting of each strut 5, relative to previously known struts 5.

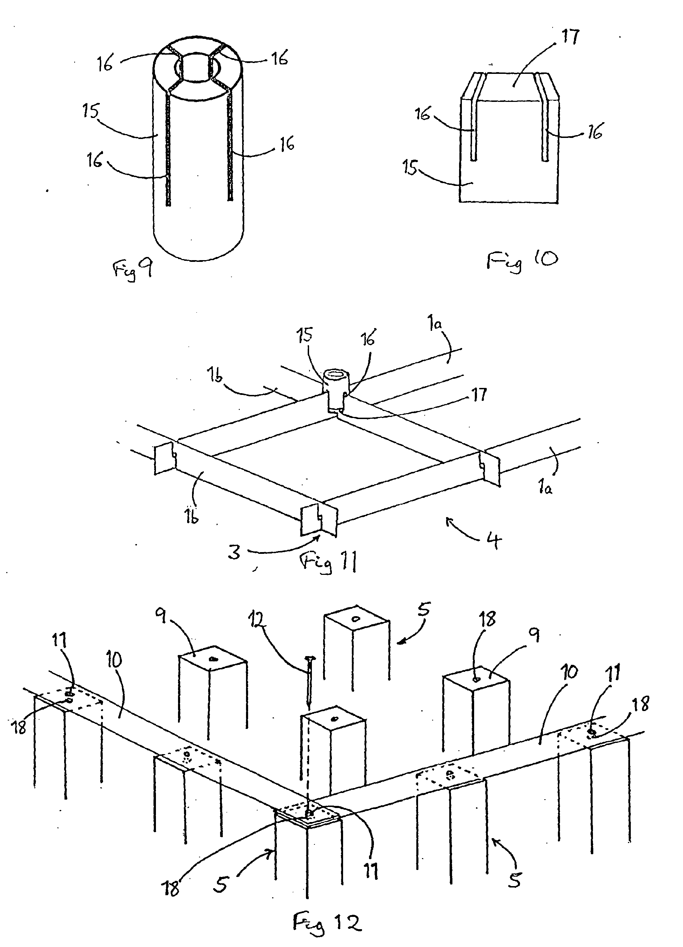

Nevertheless, it may still be inconvenient to have to manipulate the strips 1a, 1b at each intersection into general alignment as the strut 5 is offered up thereto. An alignment piece 15 is therefore provided along with the kit of parts of a bottle rack, and, as shown in Figure 9, comprises an elongate hollow cylindrical body with four radially aligned slits 16 extending into the body from one end. The slits 16 are arranged at 90° intervals around the cylindrical body. The body itself is conveniently formed from a plastics material such as nylon or PVC. The alignment piece 15 of Figure 10 is similar to that of Figure 9, with the addition of a bevel 17 around the end thereof provided with the slits 16.

The use of the alignment piece 15 is shown in Figure 11. It is mounted to an intersection 3 of the frontal grid 4, with the metal strips 1a, 1b at the intersection 3 received by the slits 16. The strips 1a, 1b are held upright and substantially orthogonal one to the other. Around two or three alignment pieces 15 are mounted to respective non-adjacent intersections 3 of the frontal grid 4. This is usually sufficient for the entire grid 4 to remain sufficiently stable and in alignment for the subsequent mounting thereto of the struts 5.

The alignment pieces 15 are sufficiently small not to form an obstruction as the struts 5 are added to the grid 4. Once each intersection 3 not provided with an alignment piece 15 has a strut 5 mounted thereto, the alignment pieces 15 are removed and replaced with further struts 5. By this stage, the struts 5 are maintaining the grid 4 in alignment. The bevel 17 of the alignment piece 15 makes it easier for a user to position two or three fingertips beneath the alignment piece 15 to remove it from the grid 4.

As the alignment pieces 15 are not intended to remain on the bottle rack in use, the slits 16 need not grip the strips 1a, 1b as tightly as do the slots 7 of the struts 5. The alignment pieces 15 are hence relatively quick to install and remove again.

A further benefit of the bottle rack of the present invention described above is that the second ends 9 of the struts 5 tend to be more accurately aligned than they are in existing bottle racks. It is thus easier to line up the metal strips 10 of the rear grid for mounting thereto. It is also of benefit to add a pilot hole 18 in the second end 9 of each strut 5 to receive the nail 12 or other fixing once it has been passed through a respective aperture 11 of each metal strip 10 to be mounted to the strut 5.

The bottle rack of the present invention, assembled as described with the assistance of the temporarily mounted alignment pieces, is much more easily and rapidly assemblable than the corresponding bottle racks available hitherto. It is also easier to assemble accurately, which improves both its appearance and its sturdiness.

## Claims

1. A bottle storage rack comprising a substantially orthogonal grid of strip means (1), held at intersections by a plurality of elongate support members (5) each having orthogonal slot means (7) at a first end, **characterised in that** each said slot means is wider adjacent a mouth (14) thereof than it is at an inner end (13), and which are adapted so to accommodate a respective intersection of the grid, that the support member (5) extends substantially perpendicularly to the plane of said grid.

2. A bottle storage rack as claimed in claim 1, **characterised in that** each said slot means (7) comprises a relatively wide guide portion (14) adjacent an outer end of the slot and a narrower gripping portion (13), in which the strip means are a friction fit, extending inwardly thereof.

3. A bottle storage rack as claimed in claim 2, **characterised in that** the slot means (7) are each profiled to taper progressively down from the guide portion (14) to the gripping portion (13).

4. A bottle storage rack as claimed in any one of the preceding claims, **characterised in that** the support members (5) are connected one to another at a second end of each by means of a plurality of apertured strip means (10).

5. A bottle storage rack as claimed in claim 4, **characterised in that** the second end of each support member is provided with a pilot hole (18) extending generally longitudinally of the support member, such that an apertured strip means (10) may be mounted thereto using a nail, screw or other fixing extending through an aperture (11) of said strip means and into the pilot hole (18).

6. A bottle storage rack as claimed in any one of the preceding claims, **characterised in that** the grid of strip means comprises first and second sets of strip members having respective interlocking notches (2) at intersections of the grid.

7. A method of assembling the bottle storage rack claimed in any one of the preceding claims, comprising the steps of providing a plurality of notched, strip members (1), arranging the strip members in a generally orthogonal grid with a notch (2) of a first strip member engaging with a notch (2) of a second strip member, providing a plurality of elongate support members (5) each provided with two orthogonal slot means (7), **characterised in that** each said slot means is wider adjacent its mouth than at an inner end, and **in that** said support members (5) are mounted to at least some intersections of the grid.

8. A method as claimed in claim 7 **characterised in that** each slot means (7) comprises a relatively wide guide portion (14) adjacent an outer end of the slot and a narrower gripping portion (13), in which the strip means are a friction fit, extending inwardly.

9. A method as claimed in either claim 7 or claim 8, **characterised by** the further steps of providing a plurality of alignment means (15), each comprising a body provided with two orthogonal slot means (16), mounting each said alignment means (15) to an intersection of the grid to hold the grid substantially in alignment.

10. A method as claimed in claim 9, **characterised in that** the alignment means (15) are removed and further support members (5) are then mounted to the intersections vacated thereby.

## Patentansprüche

1. Flaschenlagergestell, das Folgendes umfasst: ein im Wesentlichen orthogonales Gitter von Streifenmitteln (1), die an Schnittflächen von einer Vielzahl länglicher Stützelemente (5) gehalten werden, von denen jedes ein orthogonales Schlitzmittel (7) an einem ersten Ende aufweist, **dadurch gekennzeichnet, dass** jedes Schlitzmittel benachbart zu einer Öffnung (14) desselben breiter ist als an einem inneren Ende (13), wobei sie so ausgelegt sind, dass sie eine jeweilige Schnittfläche des Gitters so aufnehmen, dass sich das Stützelement (5) im Wesentlichen senkrecht zur Ebene des Gitters erstreckt.

2. Flaschenlagergestell nach Anspruch 1, **dadurch gekennzeichnet, dass** jedes Schlitzmittel (7) einen relativ breiten Führungsabschnitt (14) benachbart zu einem äußeren Ende des Schlitzes und einen engeren Greifabschnitt (13) umfasst, in dem die Streifenmittel eine Reibpassung darstellen und der sich einwärts davon erstreckt.

3. Flaschenlagergestell nach Anspruch 2, **dadurch gekennzeichnet, dass** jedes der Schlitzmittel (7) ein Profil aufweist, das sich fortschreitend von dem Führungsabschnitt (14) zu dem Greifabschnitt (13) abwärts verjüngt.

4. Flaschenlagergestell nach einem der vorhergehenden Ansprüche, **dadurch gekennzeichnet, dass** die Stützelemente (5) an einem zweiten Ende eines jeden mit Hilfe einer Vielzahl von mit einer Öffnung versehenen Streifenmitteln (10) miteinander verbunden sind.

5. Flaschenlagergestell nach Anspruch 4, **dadurch gekennzeichnet, dass** das zweite Ende jedes Stützelements mit einem Führungsloch (18) versehen ist, das sich im Allgemeinen in Längsrichtung des Stützelements erstreckt, so dass ein mit einer Öffnung versehenes Streifenmittel (10) unter Verwendung eines Nagels, einer Schraube oder einer anderen Befestigung, die sich durch eine Öffnung (11) des Streifenmittels und in das Führungsloch (18) erstreckt, daran befestigt sein kann.

6. Flaschenlagergestell nach einem der vorhergehenden Ansprüche, **dadurch gekennzeichnet, dass** das Gitter von Streifenmitteln einen ersten und einen zweiten Satz von Streifenelementen umfasst, die jeweilige ineinandergreifende Kerben (2) an Schnittflächen des Gitters aufweisen.

7. Verfahren zum Zusammenbau des Flaschenlagergestells nach einem der vorhergehenden Ansprüche, das folgende Schritte umfasst: Bereitstellen einer Vielzahl von gekerbten Streifenelementen (1), Anordnen der Streifenelemente in einem im Allgemeinen orthogonalen Gitter, wobei eine Kerbe (2) eines ersten Streifenelements in eine Kerbe (2) eines zweiten Streifenelements eingreift, Bereitstellen einer Vielzahl länglicher Stützelemente (5), die jeweils mit zwei orthogonalen Schlitzmitteln (7) versehen sind, **dadurch gekennzeichnet, dass** jedes Schlitzmittel benachbart zu seiner Öffnung breiter ist als an einem inneren Ende, und **dadurch**, dass die Stützelemente (5) an mindestens einigen Schnittflächen des Gitters befestigt sind.

8. Verfahren nach Anspruch 7, **dadurch gekennzeichnet, dass** jedes Schlitzmittel (7) einen relativ breiten Führungsabschnitt (14) benachbart zu einem äußeren Ende des Schlitzes und einen engeren Greifabschnitt (13) umfasst, in dem die Streifenmittel eine Reibpassung darstellen und der sich einwärts erstreckt.

9. Verfahren nach Anspruch 7 oder Anspruch 8, **gekennzeichnet durch** folgende weitere Schritte: Bereitstellen einer Vielzahl von Ausrichtungsmitteln (15), die jeweils einen Körper umfassen, der mit zwei orthogonalen Schlitzmitteln (16) versehen ist, Befestigen jedes Ausrichtungsmittels (15) an einer Schnittfläche des Gitters, um das Gitter im Wesentlichen ausgerichtet zu halten.

10. Verfahren nach Anspruch 9, **dadurch gekennzeichnet, dass** die Ausrichtungsmittel (15) entfernt sind und weitere Stützelemente (5) daraufhin an den **dadurch** frei gewordenen Schnittflächen befestigt sind.

## Revendications

1. Casier à bouteilles comprenant une grille essentiellement orthogonale de bandes (1), maintenues aux intersections par une pluralité d'éléments de soutien allongés (5) pourvus chacun de fentes orthogonales (7) à une première extrémité, **caractérisé en ce que** chacune desdites fentes est plus large au voisinage d'une ouverture (14) de celle-ci qu'elle ne l'est à une extrémité intérieure (13), et qui sont adaptés pour pouvoir accueillir une intersection respective de la grille que l'élément de soutien (5) s'étend essentiellement perpendiculairement au plan de ladite grille.

2. Casier à bouteilles selon la revendication 1, **caractérisé en ce que** chacune desdites fentes (7) comprend une partie guide relativement large (14) adjacente à une extrémité extérieure de la fente et une partie de retenue (13) plus étroite, dans laquelle les bandes sont maintenues par friction, s'étendant vers l'intérieur de celle-ci.

3. Casier à bouteilles selon la revendication 2, **caractérisé en ce que** les fentes (7) sont chacune profilées pour s'effiler progressivement en décroissant de la partie guide (14) vers la partie de retenue (13).

4. Casier à bouteilles selon l'une quelconque des revendications précédentes, **caractérisé en ce que** les éléments de soutien (5) sont connectés les uns aux autres à une deuxième extrémité de chacun au moyen d'une pluralité de bandes perforées (10).

5. Casier à bouteilles selon la revendication 4, **caractérisé en ce que** la deuxième extrémité de chaque élément de soutien est munie d'un avant-trou (18) s'étendant généralement longitudinalement à l'élément de soutien, de telle façon qu'une bande perforée (10) puisse y être montée au moyen d'un clou, d'une vis ou d'un autre moyen de fixation s'étendant au travers d'une perforation (11) de ladite bande et dans l'avant-trou (18).

6. Casier à bouteilles selon l'une quelconque des revendications précédentes, **caractérisée en ce que** la grille de bandes comprend un premier et un second jeu d'éléments de bandes ayant des encoches (2) s'emboîtant respectivement aux intersections de la grille.

7. Procédé d'assemblage du casier à bouteilles selon l'une quelconque des revendications précédentes, comprenant les étapes consistant à fournir une pluralité d'éléments de bandes munis d'encoches (1), à agencer les éléments de bandes en grille généralement orthogonale avec une encoche (2) d'un premier élément de bande s'engageant dans une encoche (2) d'un second élément de bande, à fournir une pluralité d'éléments de soutien allongés (5) chacun muni de deux fentes orthogonales (7), **caractérisé en ce que** chaque dite fente est plus large au niveau de son ouverture qu'à une extrémité interne, et **en ce que** lesdits éléments de soutien (5) sont montés sur au moins certaines intersections de la grille.

8. Procédé selon la revendication 7 **caractérisé en ce que** chaque fente (7) comprend une partie guide relativement large (14) adjacente à une extrémité extérieure de la fente et une partie plus étroite de retenue (13), dans laquelle les bandes sont maintenues par friction, s'étendant vers l'intérieur.

9. Procédé selon l'une quelconque des revendications 7 ou 8, **caractérisé par** les étapes supplémentaires consistant à fournir une pluralité de moyens d'alignement (15), chacun comprenant un corps muni de deux fentes orthogonales (16), à monter chacun desdits moyens d'alignement (15) à une intersection de la grille pour maintenir la grille essentiellement alignée.

10. Procédé selon la revendication 9 **caractérisé en ce que** les moyens d'alignement (15) sont retirés et des éléments de soutien supplémentaires (5) sont alors montés aux intersections ainsi laissées vacantes.
